# EUROPEAN PATENT SPECIFICATION

(11) **EP 0 649 452 B1**
(45) Date of publication and mention of the grant of the patent: **11.06.1997**
(21) Application number: 93916775.5
(22) Date of filing: 28.06.1993
(51) Int. Cl.: C09D 167/00, C09D 133/14

(54) **THERMOSETTING POWDER COATING COMPOSITIONS**
WÄRMEHÄRTENDE PULVERLACKZUSAMMENSETZUNGEN
COMPOSITIONS DE REVETEMENT PAR POUDRE THERMODURCISSABLES

(30) Priority: 06.07.1992 US 909478
(43) Date of publication of application: 26.04.1995
(73) Proprietor: EASTMAN CHEMICAL COMPANY, Kingsport, TN 37660 (US)
(72) Inventor: BARBEE, Robert, Boyd, Kingsport, TN 37663 (US); PHILLIPS, Brian, Steven, Kingsport, TN 37664 (US)
(74) Representative: Wibbelmann, Jobst, Dr., Dipl.-Chem.
(86) International application number: US9306089
(87) International publication number: WO9401506

(56) References cited:
- EP-A- 0 237 285
- DE-A- 3 213 160

## Description

This invention belongs to the field of powder coatings. More particularly, this invention relates to a powder coating composition comprised of a blend of an acrylic copolymer and a semicrystalline polyester, e.g., poly(tetramethylene trans-1,4-cyclohexanedicarboxylate).

Plastic materials used in the manufacture of powder coatings are classified broadly as either thermosetting or thermoplastic. In the application of thermoplastic powder coatings, heat is applied to the coating on the substrate to melt the particles of the powder coating and thereby permit the particles to flow together and form a smooth coating.

Thermosetting coatings, when compared to coatings derived from thermoplastic compositions, generally are tougher, more resistant to solvents and detergents, have better adhesion to metal substrates and do not soften when exposed to elevated temperatures. However, the curing of thermosetting coatings has created problems in obtaining coatings which have, in addition to the above-stated desirable characteristics, good smoothness and flexibility. Coatings prepared from thermosetting powder compositions, upon the application of heat, may cure or set prior to forming a smooth coating, resulting in a relatively rough finish referred to as an "orange peel" surface. Such a coating surface or finish lacks the gloss and luster of coatings typically obtained from thermoplastic compositions. The "orange peel" surface problem has caused thermosetting coatings to be applied from organic solvent systems which are inherently undesirable because of the environmental and safety problems that may be occasioned by the evaporation of the solvent system. Solvent-based coating compositions also suffer from the disadvantage of relatively poor percent utilization, i.e., in some modes of application, only 60 percent or less of the solvent-based coating composition being applied contacts the article or substrate being coated. Thus, a substantial portion of solvent-based coatings can be wasted since that portion which does not contact the article or substrate being coated obviously cannot be reclaimed.

In addition to exhibiting good gloss, impact strength and resistance to solvents and chemicals, coatings derived from thermosetting coating compositions must possess good to excellent flexibility. For example, good flexibility is essential for powder coating compositions used to coat sheet (coil) steel which is destined to be formed or shaped into articles used in the manufacture of various household appliances and automobiles wherein the sheet metal is flexed or bent at various angles.

It is well known that the weatherability of coatings based on acrylic resins is superior to the weatherability of coatings based on widely used polyester resins. However, performance properties of acrylic coatings, such as impact, flexibility, and adhesion, are poor compared to the excellent performance properties of polyester coatings. Past attempts to provide coatings with both good weatherability and flexibility by blending acrylics and polyesters have resulted in only a marginal increase in performance.

The present invention, as described below, describes coatings formulated with blends of (1) hydroxylated acrylic resins, (2) polyesters having free hydroxy groups based on cyclohexanedicarboxylic acid and a diol or triol, e.g., 1,4-butanediol, and (3) a blocked isocyanate as cross-linking agent have both the excellent weatherability of acrylic coatings and the performance properties of polyester coatings.

U.S. Patent 3,993,849 discloses powder paint which is a blend of (A) an acrylic polymer, (B) a hydroxy functional polyester, and (C) a blocked isocyanate.

M. K. Yousuf, Modern Paint and Coatings, "New Thermosetting Acrylics Expand Powder Coating Versatility", 48, (1989) describes blends of hydroxylated acrylics with hydroxylated polyesters and demonstrates modest improvement in weatherability.

U.S. Patent 4,818,791 discloses a powder paint comprising (A) a polyester resin containing both hydroxyl and carboxyl groups (B) a vinyl polymer containing both glycidyl and hydroxyl groups and (C) a blocked isocyanate.

U.S. Patent 4,824,909 describes a powder coating composition comprising (A) a polyester resin having both acid and hydroxyl functionality, (B) an acrylic with a hydroxyl and/or a glycidyl group, and (C) a blocked isocyanate.

These references do not recognize the marked improvement in both weatherability and flexibility that an all-aliphatic semicrystalline polyester imparts to an acrylic formulation when compared to the use of aromatic polyesters in acrylic formulations as illustrated below.

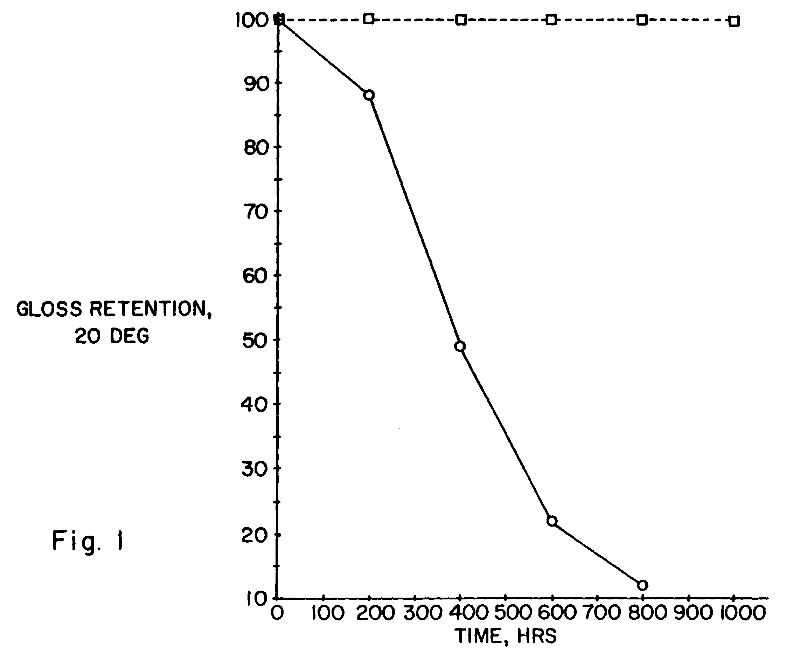

Figure 1 is a plot of QUV weathering data. The percent gloss retention measured at 20° is plotted versus the time in hours. The "circle" points represents a coating formulated from 50 weight percent of acrylic and 50 weight percent of a commercial polyester resin. The "square" points represent a coating formulated from 50 weight percent of an acrylic resin and 50 weight percent of poly(tetramethylene 1,4-cyclohexanedicarboxylate).

The present invention provides thermosetting powder coating compositions comprised of a coreactive mixture of hydroxylated acrylic copolymers, hydroxylated aliphatic polyesters, and a blocked polyisocyanate. The coatings obtained by use of these compositions exhibit excellent QUV weatherability and toughness.

This invention relates to thermosetting powder coating compositions based on blends of hydroxylated aliphatic polyesters and acrylic resins. The powder coating compositions comprise an intimate blend, typically in a finely divided form of:
A. a blend of polymers comprising
   1. 30 to 70 percent by weight of an acrylic copolymer comprising
      a. 10 to 40 percent by weight, based on the weight of the copolymer, of a hydroxy-C₂-C₄ alkyl acrylate or a hydroxy-C₂-C₄ alkyl methacrylate or a mixture of said hydroxy-C₂-C₄ alkyl acrylate and hydroxy-C₂-C₄ alkyl methacrylate, and
      b. 90 to 60 percent by weight, based on the weight of the copolymer, of at least one monoethylenically unsaturated monomer which is free of hydroxyl groups; wherein the copolymer has a number average molecular weight of 1,000 to 8,000, a weight average molecular weight of 2,000 to 16,000 and a glass transition temperature of 50°C to 90°C; and
   2. 70 to 30 percent by weight of one or more polyesters, and
B. a cross-linking effective amount of a blocked isocyanate cross-linking agent,
characterized in that said polyesters are semicrystalline and comprised of diol and/or triol residues and dicarboxylic acid residues, said diol and/or triol residues being residues of a C₂-C₁₀ aliphatic compound having an even number of carbon atoms and two or three hydroxyl groups, and dicarboxylic acid residues comprised of residues of 1,4-cyclohexanedicarboxylic acid, said polyesters having a hydroxyl number of 20 to 200 and an inherent viscosity of 0.1 to 0.5 dl/g.

The powder coatings provided by this invention exhibit strikingly better weatherability than polyester powder coatings and better flexibility and impact strength than acrylic powder coatings. The effectiveness of this blend on QUV weathering of powder coatings can be illustrated by a comparison of powder coatings formulated with (1) 50 weight percent of acrylic and 50 weight percent of poly(tetramethylene 1,4-cyclohexanedicarboxylate) and (2) 50 weight percent of acrylic and 50 weight percent of a commercial polyester resin. During QUV exposure, formulations of (1) and (2) retained 100% and 23%, respectively, of 20° gloss after 600 hours (see Figure 1). Impact resistance of (1) and (2) was 160 and 40 inch-pounds, respectively. This data illustrates the superior weathering and impact of coatings formulated with the novel blend of acrylic and poly(tetramethylene trans-1,4-cyclohexanedicarboxylate) polyester over the corresponding coatings formulated with an aromatic polyester.

The aliphatic polyester poly(C₂-C₁₀ alkylene 1,4-cyclohexanedicarboxylate) may be produced using well known polycondensation procedures. The polymer may be prepared from, e.g., 1,4-butanediol and the acid or diester of trans-1,4-cyclohexanedicarboxylic acid. When the diester is used, some excess glycol is preferably used during ester interchange and is removed under reduced pressure until the desired viscosity is obtained.

The aliphatic polyester component preferably is comprised of at least 90% diol residues and up to 10 percent of triol residues. Preferred diol residues are neopentyl glycol, ethylene glycol, 1,4-butanediol, 1,6-hexanediol, 1,8-octanediol, and 1,10-decanediol. Examples of preferred triols includes trimethylolpropane and glycerol. The dicarboxylic acid residues are preferably residues of trans-1,4-cyclohexanedicarboxylic acid, but up to about 15 weight percent of such residues may be replaced with residues of a linear aliphatic dicarboxylic acid of the general structure HOOC(CH₂)ₙCOOH, wherein n is an integer of about 2 to 20. Examples of such include adipic acid, succinic acid, sebacic acid, citric acid, itaconic acid, azelaic acid, dodecanedioic acid, and the like. When trans-1,4-cyclohexanedicarboxylic acid is referred to herein, it is intended to mean at least 70% trans-isomer. As a preferred embodiment of the present invention, the dicarboxylic acid residues consist essentially of residues of trans-1,4-cyclohexanedicarboxylic acid

The hydroxylated acrylic copolymer resins are well known in the art and are commercially available as, for example, SCX 800B, manufactured by S. C. Johnson. Typical acrylic copolymers contain methyl methacrylate, butyl methacrylate, styrene, and hydroxyethyl methacrylate residues.

The hydroxylated acrylic copolymer resin preferably has a number average molecular weight of 1,000 to 8,000, preferably 2,000 to 5,000, and a weight average molecular weight of 2,000 to 16,000, preferably 4,000 to 12,000 as determined by gel permeation chromatography in tetrahydrofuran. An especially preferred hydroxylated acrylic polymer has a hydroxyl number of about 43, an acid number of about 15, and an ICI Melt Viscosity of about 60 poise at 200°C.

The hydroxylated acrylic copolymer resin can be prepared by conventional solution, emulsion, or bead polymerization techniques using conventional polymerization catalysts.

The relative amounts of the hydroxylated acrylic copolymer resin and the aliphatic semicrystalline polyester can be varied substantially depending on a number of factors such as the hydroxyl number of the aliphatic polyester and the properties required of the coatings to be prepared from the compositions, etc.

Suitable curing or cross-linking agents for use with hydroxyl-functional polyesters and acrylics are well known in the art. Preferred cross-linking agents include blocked isocyanates. The blocked isocyanate compounds are known compounds and can be obtained from commercial sources. Examples include those which are based on isophorone diisocyanate blocked with ε-caprolactam, commercially available under the trademarks HULS 1530 and Cargill 2400, and phenol-blocked hexamethylene diisocyanate. The amount of the blocked isocyanate cross-linking compound present in the compositions of this invention can be varied depending on several factors such as those mentioned hereinabove relative to the amount of components (A) and (B) which are utilized. Typically, the amount of cross-linking compound which will effectively cross-link the polymers to produce coatings having a good combination of properties is in the range of about 5 to 30 weight percent, preferably 15 to 25 weight percent, based on the total weight of the polyester/acrylate blend and the cross-linking compound.

The most readily-available, and thus the preferred, blocked isocyanate cross-linking agents or compounds are those commonly referred to as ε-caprolactam-blocked isophorone diisocyanate, e.g., those described in U.S. Patent Nos. 3,822,240, 4,150,211 and 4,212,962, incorporated herein by reference. However, the products marketed as ε-caprolactam-blocked isophorone diisocyanate may consist primarily of the blocked, difunctional, monomeric isophorone diisocyanate, i.e., a mixture of the cis and trans isomers of 3-isocyanatomethyl-3,5,5-trimethylcyclohexylisocyanate, the blocked, difunctional dimer thereof, the blocked, trifunctional trimer thereof or a mixture of the monomeric, dimeric and/or trimeric forms. For example, the blocked polyisocyanate compound used as the cross-linking agent may be a mixture consisting primarily of the ε-caprolactam-blocked, difunctional, monomeric isophorone diisocyanate and the ε-caprolactam-blocked, trifunctional trimer of isophorone diisocyanate. The description herein of the cross-linking agents as "polyisocyanates" refers to compounds which contain at least two isocyanato groups which are blocked with, i.e., reacted with, another compound, e.g., ε-caprolactam. The reaction of the isocyanato groups with the blocking compound is reversible at elevated temperatures, e.g., normally about 150°C, and above, at which temperature the isocyanato groups are available to react with the hydroxyl groups present on the free hydroxy groups of the polyester and/or acrylate to form urethane linkages.

Alternatively, the blocked isocyanate may be a cross-linking effective amount of an adduct of the 1,3-diazetidine-2,4-dione dimer of isophorone diisocyanate and a diol having the structure 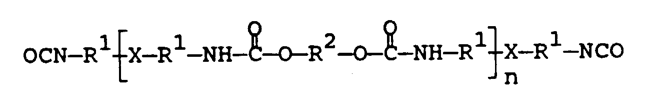 wherein
R¹ is a divalent 1-methylene-1,3,3-trimethyl-5-cyclohexyl radical, i.e., a radical having the structure 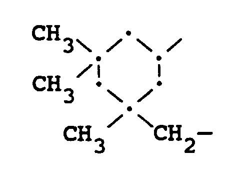
R² is a divalent aliphatic, cycloaliphatic, araliphatic or aromatic residue of a diol; and
X is a 1,3-diazetidine-2,4-dionediyl radical, i.e., a radical having the structure 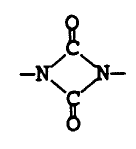
wherein the ratio of NCO to OH groups in the formation of the adduct is about 1:0.5 to 1:0.9, the mole ratio of diazetidinedione to diol is from 2:1 to 6:5, the content of free isocyanate groups in the adduct is not greater than 8 weight percent and the adduct has a molecular weight of about 500 to 4000 and a melting point of about 70 to 130°C.

The adducts of the 1,3-diazetidine-2,4-dione dimer of isophorone diisocyanate and a diol are prepared according to the procedures described in U.S. Patent 4,413,079, incorporated herein by reference, by reacting the diazetidine dimer of isophorone diisocyanate, preferably free of isocyanurate trimers of isophorone diisocyanate, with diols in a ratio of reactants which gives as isocyanto:hydroxyl ratio of about 1:0.5 to 1:0.9, preferably 1:0.6 to 1:0.8. The adduct preferably has a molecular weight of 1450 to 2800 and a melting point of about 85 to 120°C. The preferred diol reactant is 1,4-butanediol. Such an adduct is commercially available under the name Huls BF1540.

Conventional ultraviolet light stabilizers, such as TINUVIN 234, and hindered amine light stabilizers, such as TINUVIN 144 may also be used. Also, conventional dyes or pigments such as R960 titanium dioxide pigment marketed by Du Pont may be used.

The powder coating compositions of this invention may be prepared from the compositions described herein by dry-mixing and then melt-blending components A and B, and the cross-linking compound, and preferably along with a cross-linking catalyst, along with other additives commonly used in powder coatings, and then grinding the solidified blend to a particle size, e.g., an average particle size in the range of about 10 to 300 microns, suitable for producing powder coatings. For example, the ingredients of the powder coating composition may be dry blended and then melt blended in a Brabender extruder at 90° to 130°C, granulated and finally ground. The melt blending should be carried out at a temperature sufficiently low to prevent the unblocking of the polyisocyanate cross-linking compound and thus avoiding premature cross-linking.

Typical of the additives which may be present in the powder coating compositions include benzoin, flow aids or flow control agents which aid the formation of a smooth, glossy surface, stabilizers, pigments and dyes.

The powder coating compositions preferably contain a flow aid, also referred to as flow control or leveling agents, to enhance the surface appearance of cured coatings of the powder coating compositions. Such flow aids typically comprise acrylic polymers and are available from several suppliers, e.g., MODAFLOW from Monsanto Company and ACRONAL from BASF. Other flow control agents which may be used include MODAREZ MFP available from Synthron, EX 486 available from Troy Chemical, BYK 360P available from BYK Mallinkrodt and PERENOL F-30-P available from Henkel. An example of one specific flow aid is an acrylic polymer having a molecular weight of about 17,000 and containing 60 mole percent 2-ethylhexyl methacrylate residues and about 40 mole percent ethyl acrylate residues. The amount of flow aid present may preferably be in the range of about 0.5 to 4.0 weight percent, based on the total weight of the resin component, and the cross-linking agent.

The powder coating compositions may be deposited on various metallic and non-metallic (e.g., thermoplastic or thermoset composite) substrates by known techniques for powder deposition such as by means of a powder gun, by electrostatic deposition or by deposition from a fluidized bed. In fluidized bed sintering, a preheated article is immersed into a suspension of the powder coating in air. The particle size of the powder coating composition normally is in the range of 60 to 300 microns. The powder is maintained in suspension by passing air through a porous bottom of the fluidized bed chamber. The articles to be coated are preheated to about 250° to 400°F (about 121° to 205°C) and then brought into contact with the fluidized bed of the powder coating composition. The contact time depends on the thickness of the coating that is to be produced and typically is from 1 to 12 seconds. The temperature of the substrate being coated causes the powder to flow and thus fuse together to form a smooth, uniform, continuous, uncratered coating. The temperature of the preheated article also effects cross-linking of the coating composition and results in the formation of a tough coating having a good combination of properties. Coatings having a thickness between 200 and 500 microns may be produced by this method.

The compositions also may be applied using an electrostatic process wherein a powder coating composition having a particle size of less than 100 microns, preferably about 15 to 50 microns, is blown by means of compressed air into an applicator in which it is charged with a voltage of 30 to 100 kV by high-voltage direct current. The charged particles then are sprayed onto the grounded article to be coated to which the particles adhere due to the electrical charge thereof. The coated article is heated to melt and cure the powder particles. Coatings of 25 to 120 microns thickness may be obtained.

Another method of applying the powder coating compositions is the electrostatic fluidized bed process which is a combination of the two methods described above. For example, annular or partially annular electrodes are mounted in the air feed to a fluidized bed so as to produce an electrostatic charge such as 50 to 100 kV. The article to be coated, either heated, e.g., 250° to 400°F, or cold, is exposed briefly to the fluidized powder. The coated article then can be heated to effect cross-linking if the article was not preheated to a temperature sufficiently high to cure the coating upon contact of the coating particles with the article. The powder coating compositions of this invention may be used to coat articles of various shapes and sizes constructed of heat-resistance materials such as glass, ceramic and various metal materials. The compositions are especially useful for producing coatings on articles constructed of metals and metal alloys, particularly steel articles.

Further examples of formulation methods, additives, and methods of powder coating application may be found in User's Guide to Powder Coating, 2nd Ed., Emery Miller, editor, Society of Manufacturing Engineers, Dearborn, (1987).

### Experimental Section

The components of the compositions according to this invention may be mixed by dry blending in a Henschel mixer, followed by compounding in a ZSK-30 Extruder (Werner & Pfleiderer) or APV twin screw extruder at 110-130°C, grinding, and screening to obtain powder with average particle size of about 35 microns.

The powdered compositions may be electrostatically deposited on the substrate by use of a powder gun. After deposition, the powder is heated to a temperature sufficient to cause its particles to flow and fuse together to form a smooth, uniform surface. Coatings were prepared on 3 inch by 9 inch panels of 20-gauge, polished, cold roll steel, the surface of which has been zinc phosphated (Bonderite 37, The Parker Company).

All inherent viscosities are determined at 25°C in a (60/40 by weight) mixture of phenol/tetrachloroethane at a concentration of 0.5 g/100 ml. Acid and hydroxyl numbers are determined by titration and are reported herein as mg of KOH consumed for each gram of polymer. The glass transition temperatures (Tg) and the melting temperatures (Tm) are determined by differential scanning calorimetry (DSC) on the second heating cycle at a scanning rate of 20° per minute after the sample has been heated to melt and quenched to below the glass transition temperature of the polymer. Tg values are reported as the midpoint of the transition and Tm at peaks of transitions.

The molecular weights were determined by gel-permeation chromotography (GPC) on a Perkin-Elmer instrument with tetrahydrofuran as a mobile phase and solvent. Values are reported in polystyrene equivalents.

The artificial weatherability of the coatings was determined by exposure of the coated panels in a Cyclic Ultraviolet Weathering Tester (QUV) with 313 nm fluorescent tubes. The test condition was 8 hours of light at 70°C and 4 hours of condensation at 45°C.

Impact strength is determined by using a Gardner Laboratory, Inc., Impact Tester. A weight is dropped within a slide tube from a specified height to hit a punch having a 5/8 inch diameter hemispherical nose which is driven into the front (coated face) or back of the panel. The highest impact which does not crack the coating is recorded in inch-pounds, front and reverse.

The 20° and 60° gloss are measured using a gloss meter (Gardner Laboratory, Inc., Model GC-9095) according to ASTM D-523.

The pencil hardness of a coating is that of the hardest pencil that will not cut into the coating according to ASTM 3363-74 (reapproved 1980). The results are expressed according to the following scale: (softest) 6B, 5B, 4B, 3B, 2B, B, HB, F, H, 2H, 3H, 4H, 5H, 6H (hardest).

The flexibility of the coatings was determined in accordance with ASTM 4145-83 at ambient temperature by bending or folding a coated panel back against itself, using a hydraulic jack pressurized at 10,000 pounds per square inch (psi), until the apex of the bend is as flat as can be reasonably achieved. This initial bend is referred to as OT meaning that there is nothing (zero thickness) between the bent portions of the panel. The bend is examined using a 10X magnifying glass and, if fractures on the coating are observed, the panel is bent a second time (1T) to form a three-layer sandwich. The second bend is inspected for coating fracture and this procedure is repeated, forming 4-, 5-, 6-, etc. layer sandwiches, until a bend exhibits no fracture of the coating. The result of each bend test is the minimum thickness (minimum T-bend) of the bend which does not give any fractures of the coating. Although the bend test used is excessively severe for most purposes for which coated articles are used, it provides a means to compare the flexibilities of different powder coating compositions.

The compositions of the present invention are further illustrated by the following examples.

### EXAMPLE 1

This example illustrates the typical procedure for preparing the all-aliphatic polyesters of this invention. A 3000 mL, 3-necked, round bottom flask equipped with a stirrer, a short distillation column, and an inlet for nitrogen, is charged with dimethyl cyclohexanedicarboxylate (1280.8 g, 6.40 mol), 1,4-butanediol (692.9 g, 7.683 mol, 10% excess), and 100 ppm of titanium as titanium tetraisopropoxide in 2-propanol. The flask and contents are heated under nitrogen atmosphere to a temperature of 170°C at which point methanol begins to distill rapidly from the flask. After the reaction mixture is heated with stirring at this temperature for about 1 hour, the temperature is increased to 200°C for two hours, raised to 215°C for four hours, and then to 235°C. After three hours at this temperature, a vacuum of 10 mm of mercury is applied over a period of 12 minutes. Stirring is continued under 10 mm of mercury at 235°C for about three hours to produce a low melt viscosity, colorless polymer. The resulting resin has an inherent viscosity of 0.21, a melting point of 150°C, a hydroxyl number of 45, an acid number of 2, and a molecular weight by GPC of 2500.

### EXAMPLE 2

A powder coating composition was prepared from the following materials:

| | |
|---|---|
| 572.8 g | Polyester of Example 1; |
| 572.8 g | SCX 800B; |
| 254.4 g | HULS 1530; |
| 14.0 g | Dibutyltin Dilaurate; |
| 14.0 g | Benzoin; |
| 21.0 g | MODAFLOW III; |
| 560.0 g | TiO2; |
| 14.0 g | TINUVIN 144; and |
| 14.0 g | TINUVIN 234. |

The above materials were melt-blended in a ZSK twin screw extruder at 110°C, ground in a Bantam mill to which a stream of liquid nitrogen is fed, and classified through a 170 mesh screen on a KEK centrifugal sifter. The finely-divided, powder coating composition obtained had an average particle size of about 50 microns.

The powder coating composition was applied electrostatically to one side of the 3 inch by 9 inch panels described hereinabove. The coating was cured (i.e., cross-linked) by heating the coated panels at 177°C in an oven for 20 minutes. The cured coatings are about 50 microns thick.

The coating on the panel had a pencil hardness of H, both front and reverse impact strength of 160 inch-pounds, and 20° and 60° gloss values of 68 and 92, respectively. The coated panel had a T-bend flexibility value of 5. After 1000 hours of QUV exposure, the coating retained 100% of the 20° gloss.

### EXAMPLE 3

Using the procedure described in Example 2, a powder coating composition was prepared from the following materials:

| | |
|---|---|
| 302.0 g | Polyester of Example 1; |
| 101.0 g | SCX 800B; |
| 97.0 g | HULS 1530; |
| 5.0 g | Dibutyltin Dilaurate; |
| 5.0 g | Benzoin; |
| 7.5 g | MODAFLOW III; |
| 5.0 g | TINUVIN 144; and |
| 5.0 g | TINUVIN 234. |

Using the procedure of Example 2, panels are coated with this powder coating composition and the coatings are cured and evaluated. The coatings have a pencil hardness of 2B, both front and reverse impact strength of 160, and 20° and 60° gloss values of 80 and 93, respectively. The coated panel has a T-bend flexibility value of 0.

### COMPARATIVE EXAMPLE 1

A powder coating composition was prepared from the following materials:

| | |
|---|---|
| 1143.2 g | SCX 800B; |
| 256.8 g | HULS 1530; |
| 14.0 g | Dibutyltin Dilaurate; |
| 560.0 g | TiO2; |
| 14.0 g | Benzoin; |
| 21.0 g | MODAFLOW III; |
| | |
| 14.0 g | TINUVIN 144; and |
| 14.0 g | TINUVIN 234. |

Using the procedure of Example 2, panels were coated with this powder coating composition and the coatings cured and evaluated. The coatings have a pencil hardness of 3H, front impact strength of 20 inch-pounds, back impact strength of <10 inch-pounds, and 20° and 60° gloss values of 72 and 90, respectively. The coated panel has a T-bend flexibility value of >10. After 1000 hours, the coating retains 100% of the 20° gloss.

### COMPARATIVE EXAMPLE 2

A powder coating composition was prepared from the following materials:

| | |
|---|---|
| 571.6 g | RUCOTE 107, a polyester based primarily on terephthalic acid and 2,2-dimethyl-1,3-propanediol; |
| 571.6 g | SCX 800B; |
| 256.8 g | HULS 1530; |
| 560.0 g | TiO2; |
| 14.0 g | Benzoin; |
| 21.0 g | MODAFLOW III; |
| 10.0 g | TINUVIN 144; and |
| 14.0 g | TINUVIN 234. |

Using the procedure of Example 2, panels were coated with this powder coating composition and the coatings are cured and evaluated. The coatings have a pencil hardness of H, front impact strength of 40 inch-pounds, back impact strength of <10, and 20° and 60° gloss values of 46 and 87, respectively. The coated panel has a T-bend flexibility value of >10. After 600 hours, the coating retains 23% of the 20° gloss.

## Claims

1. A thermosetting powder coating composition which comprises
A. a blend of polymers comprising
1. 30 to 70 percent by weight of an acrylic copolymer comprising
a. 10 to 40 percent by weight, based on the weight of the copolymer, of a hydroxy-C₂-C₄ alkyl acrylate or a hydroxy-C₂-C₄ alkyl methacrylate or a mixture of said hydroxy-C₂-C₄ alkyl acrylate and hydroxy-C₂-C₄ alkyl methacrylate, and
b. 90 to 60 percent by weight, based on the weight of the copolymer, of at least one monoethylenically unsaturated monomer which is free of hydroxyl groups; wherein the copolymer has a number average molecular weight of 1,000 to 8,000, a weight average molecular weight of 2,000 to 16,000 and a glass transition temperature of 50°C to 90°C; and
2. 70 to 30 percent by weight of one or more polyesters, and
B. a cross-linking effective amount of a blocked isocyanate cross-linking agent,
characterized in that said polyesters are semicrystalline and comprised of diol and/or triol residues and dicarboxylic acid residues, said diol and/or triol residues being residues of a C₂-C₁₀ aliphatic compound having an even number of carbon atoms and two or three hydroxyl groups, and dicarboxylic acid residues comprised of residues of 1,4-cyclohexanedicarboxylic acid, said polyesters having a hydroxyl number of 20 to 200 and an inherent viscosity of 0.1 to 0.5 dl/g.

2. The thermosetting powder coating composition of claim 1, wherein the aliphatic polyester is poly(tetramethylene trans-1,4-cyclohexanedicarboxylate) and has a melting point in the range of 110 to 160°C, a hydroxyl number in the range of 25 to 100, and an inherent viscosity of 0.1 to 0.5 dl/g.

3. The thermosetting powder coating composition of claim 1 or 2, wherein the hydroxylated acrylic copolymer resin has a number average molecular weight of 2,000 to 5,000, and a weight average molecular weight of 4,000 to 12,000.

4. The thermosetting powder coating composition of any one of claims 1 to 3, wherein the blocked isocyanate is ε-caprolactam-blocked isophorone diisocyanate or phenol-blocked hexamethylene diisocyanate.

5. The thermosetting powder coating composition of claim 1 or 4, wherein the blocked isocyanate is an adduct of the 1,3-diazetidine-2,4-dione dimer of isophorone diisocyanate and a diol having the structure 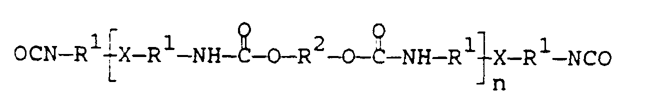 wherein
R¹ is a divalent 1-methylene-1,3,3-trimethyl-5-cyclohexyl radical, i.e., a radical having the structure 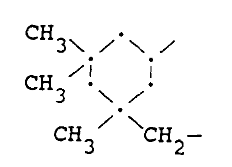
R² is a divalent aliphatic, cycloaliphatic, araliphatic or aromatic residue of a diol; and
X is a 1,3-diazetidine-2,4-dionediyl radical, i.e., a radical having the structure 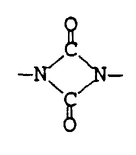
wherein the ratio of NCO to OH groups in the formation of the adduct is 1:0.5 to 1:0.9, the mole ratio of diazetidinedione to diol is from 2:1 to 6:5, the content of free isocyanate groups in the adduct is not greater than 8 weight percent and the adduct has a molecular weight of 500 to 4000 and a melting point of 70 to 130°C.

6. The thermosetting powder coating composition of claim 1, wherein said dicarboxylic acid residues consist essentially of residues of 1,4-cyclohexanedicarboxylic acid.

7. The thermosetting powder coating composition of claim 1, further comprising one or more pigments.

8. A shaped or formed article coated with the cured thermosetting powder coating composition of claim 1.

## Patentansprüche

1. Wärmehärtbare Pulverbeschichtungszusammensetzung, umfassend
A. eine Mischung von Polymeren, umfassend
1. 30 bis 70 Gew.-% eines acrylischen Copolymers, umfassend
a. 10 bis 40 Gew.-%, bezogen auf das Gewicht des Copolymers, eines Hydroxy-C₂-C₄-Alkylacrylats oder eines Hydroxy-C₂-C₄-Alkylmethacrylats oder einer Mischung des Hydroxy-C₂-C₄-Alkylacrylats und des Hydroxy-C₂-C₄-Alkylmethacrylats und
b. 90 bis 60 Gew.-%, bezogen auf das Gewicht des Copolymers, mindestens eines monoethylenisch ungesättigten Monomers, das frei von Hydroxylgruppen ist; wobei das Copolymer ein Zahlenmittel-Molekulargewicht von 1.000 bis 8.000, ein Gewichtsmittel-Molekulargewicht von 2.000 bis 16.000 und eine Glasübergangstemperatur von 50°C bis 90°C hat; und
2. 70 bis 30 Gew.-% eines oder mehrerer Polyester, und
B. eine zur Quervernetzung wirksame Menge eines blockierten Isocyanat-Quervernetzungsmittels,
gekennzeichnet dadurch, daß die Polyester semikristallin sind und Diol- und/oder Triol-Reste und Dicarbonsäurereste aufweisen, wobei die Diol- und/oder Triol-Reste Reste einer aliphatischen C₂-C₁₀-Verbindung sind, mit einer geraden Anzahl Kohlenstoffatome und zwei oder drei Hydroxylgruppen, und Dicarbonsäurereste, die 1,4-Cyclohexandicarbonsäurereste umfassen, wobei die Polyester eine Hydroxylzahl von 20 bis 200 und eine inhärente Viskosität von 0,1 bis 0,5 dl/g haben.

2. Wärmehärtbare Pulverbeschichtungszusammensetzung nach Anspruch 1, worin der aliphatische Copolyester Poly-tetramethylen-trans-1,4-Cyclohexandicarboxylat ist und einen Schmelzpunkt im Bereich von 110 bis 160°C, eine Hydroxylzahl im Bereich von 25 bis 100 und eine inhärente Viskosität von 0,1 bis 0,5 dl/g hat.

3. Wärmehärtbare Pulverbeschichtungszusammensetzung nach Anspruch 1 oder 2, worin der hydroxylierte Acrylcopolymerkunststoff ein Zahlenmittel-Molekulargewicht von 2.000 bis 5.000 und ein Gewichtsmittel-Molekulargewicht von 4.000 bis 12.000 hat.

4. Wärmehärtbare Pulverbeschichtungszusammensetzung nach einem der Ansprüche 1 bis 3, worin das blockierte Isocyanat ε-Caprolactam-blockiertes Isophorondiisocyanat oder Phenol-blockiertes Hexamethylendiisocyanat ist.

5. Wärmehärtbare Pulverbeschichtungszusammensetzung nach einem der Ansprüche 1 bis 4, worin das blockierte Isocyanat ein Addukt des 1,3-Diazetidin-2,4-dion-dimers des Isophorondiisocyanats und eines Diols mit der folgenden Struktur ist: 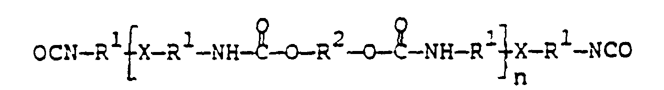 worin
R¹ ein zweiwertiger 1-Methylen-1,3,3-trimethyl-5-cyclohexyl-Rest ist, daß heißt ein Rest mit der Struktur 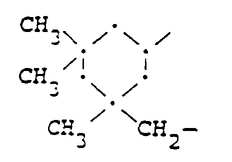
R² ist ein zweiwertiger aliphatischer, cycloaliphatischer, araliphatischer oder aromatischer Rest eines Diols und X ist ein 1,3-Diazetidin-2,4-diondiyl-Rest, daß heißt ein Radikal mit der Struktur 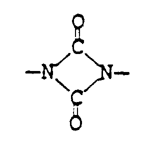
worin das Verhältnis der NCO- zu OH-Gruppen in der Bildung des Addukts 1 : 0,1 bis 1 : 0,9 ist, das Molverhältnis Diazetidindion zu Diol 2 : 1 bis 6 : 5 ist, der Gehalt an freien Isocyanatgruppen in dem Addukt ist nicht größer als 8 Gew.-% und das Addukt hat ein Molekulargewicht von 500 bis 4.000 und einen Schmelzpunkt von 70 bis 130°C.

6. Wärmehärtbare Pulverbeschichtungszusammensetzung nach Anspruch 1, worin der Dicarbonsäurerest im wesentlichen aus Resten der 1,4-Cyclohexandicarbonsäure besteht.

7. Wärmehärtbare Pulverbeschichtungszusammensetzung nach Anspruch 1, weiterhin umfassend ein oder mehrere Pigmente.

8. Gestalteter oder geformter Gegenstand, der mit einer gehärteten wärmehärtbaren Pulverbeschichtungszusammensetzung nach Anspruch 1 beschichtet ist.

## Revendications

1. Composition de revêtement en poudre thermodurcissable qui comprend
A. un mélange de polymères comprenant
1. 30 à 70 % en masse d'un copolymère acrylique comprenant
a. 10 à 40 % en masse, sur la base de la masse du copolymère, d'un acrylate d'alkyle en C₂-C₄ hydroxylé ou d'un méthacrylate d'alkyle en C₂-C₄ hydroxylé ou d'un mélange dudit acrylate d'alkyle en C₂-C₄ hydroxylé et dudit méthacrylate d'alkyle en C₂-C₄ hydroxylé, et
b. 90 à 60 % en masse, sur la base de la masse du copolymère, d'au moins un monomère monoéthyléniquement insaturé qui est dépourvu de groupes hydroxyle ; dans lequel le copolymère a une masse moléculaire moyenne en nombre de 1 000 à 8 000, une masse moléculaire moyenne en poids de 2 000 à 16 000 et une température de transition vitreuse de 50°C à 90°C ; et
2. 70 à 30 % en masse d'un ou plusieurs polyesters, et
B. une quantité efficace pour la réticulation d'un agent réticulant isocyanate bloqué,
caractérisée en ce que lesdits polyesters sont semi-cristallins et sont constitués par des résidus diols et/ou triols et des résidus acides dicarboxyliques, lesdits résidus diols et/ou triols étant des résidus d'un composé aliphatique en C₂-C₁₀ ayant un nombre pair d'atomes de carbone et deux ou trois groupes hydroxyle, et les résidus acides dicarboxyliques étant constitués par des résidus d'acide 1,4-cyclohexanedicarboxylique, lesdits polyesters ayant un indice d'hydroxyle de 20 à 200 et une viscosité inhérente de 0,1 à 0,5 dl/g.

2. Composition de revêtement en poudre thermodurcissable selon la revendication 1, dans laquelle le polyester aliphatique est du poly(trans-1,4-cyclohexanedicarboxylate de tétraméthylène) et a un point de fusion dans le domaine de 110 à 160°C, un indice d'hydroxyle dans le domaine de 25 à 100 et une viscosité inhérente de 0,1 à 0,5 dl/g.

3. Composition de revêtement en poudre thermodurcissable selon la revendication 1 ou 2, dans laquelle la résine de copolymère acrylique hydroxylé a une masse moléculaire moyenne en nombre de 2 000 à 5 000 et une masse moléculaire moyenne en poids de 4 000 à 12 000.

4. Composition de revêtement en poudre thermodurcissable selon l'une quelconque des revendications 1 à 3, dans laquelle l'isocyanate bloqué est l'isophoronediisocyanate bloqué par l'ε-caprolactame ou l'hexaméthylènediisocyanate bloqué par le phénol.

5. Composition de revêtement en poudre thermodurcissable selon la revendication 1 ou 4, dans laquelle l'isocyanate bloqué est un produit d'addition du dimère de 1,3-diazétidine-2,4-dione d'isophoronediisocyanate et d'un diol de structure : 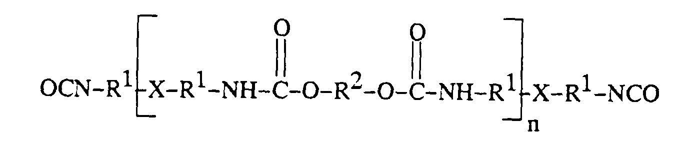 où
R¹ est un radical 1-méthylène-1,3,3-triméthyl-5-cyclohexyle divalent, c'est-à-dire un radical de structure : 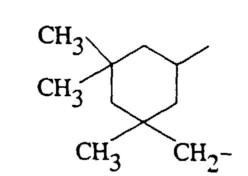
R² est un résidu aliphatique, cycloaliphatique, arylaliphatique ou aromatique divalent d'un diol ; et
X est un radical 1,3-diazétidine-2,4-dionediyle, c'est-à-dire un radical de structure : 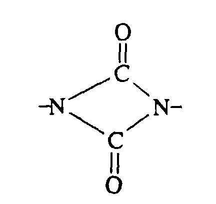 où le rapport des groupes NCO aux groupes OH dans la formation du produit d'addition est d'environ 1:0,5 à 1:0,9, le rapport molaire de la diazétidinedione au diol est de 2:1 à 6:5, la teneur en groupes isocyanate libres du produit d'addition n'est pas supérieure à 8 % en masse et le produit d'addition a une masse moléculaire de 500 à 4 000 et un point de fusion de 70 à 130°C.

6. Composition de revêtement en poudre thermodurcissable selon la revendication 1, dans laquelle lesdits résidus acides dicarboxyliques consistent essentiellement en résidus de l'acide 1,4-cydohexanedicarboxylique.

7. Composition de revêtement en poudre thermodurcissable selon la revendication 1 comprenant en outre un ou plusieurs pigments.

8. Article façonné ou formé revêtu de la composition de revêtement en poudre thermodurcissable durcie selon la revendication 1.
